(19) **Europäisches Patentamt European Patent Office Office européen des brevets**

(11) **EP 1 564 863 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
*H02J 7/34* *(2006.01)*

(21) Anmeldenummer: **04003414.2**

(22) Anmeldetag: **16.02.2004**

(54) **Kraftfahrzeug-Bordnetz mit von der Batterie getrennter Pufferung des Generatorstroms**

Vehicle power grid comprising battery independent buffering of the generator current

Réseau de bord d'un véhicule avec accumulation du courant de générateur indépendant de la batterie

(84) Benannte Vertragsstaaten:
**DE ES FR IT SE**

(43) Veröffentlichungstag der Anmeldung:
**17.08.2005 Patentblatt 2005/33**

(73) Patentinhaber: **catem DEVELEC GmbH**
**76863 Herxheim (DE)**

(72) Erfinder: **Uhl, Günter, Dr.**
**74921 Helmstadt-Bargen (DE)**

(74) Vertreter: **Grünecker, Kinkeldey, Stockmair & Schwanhäusser Anwaltssozietät Maximilianstrasse 58 80538 München (DE)**

(56) Entgegenhaltungen:
EP-A- 0 376 667      WO-A- 02/066293
US-A- 5 642 696

- DIPL.-ING. HORST BAUER: "Autoelektrik, Autoelektronik, 4. Auflage" 31. Oktober 2002 (2002-10-31), ROBERT BOSCH GMBH , STUTTGART , XP002288350 * Seite 20 - Seite 23 *

EP 1 564 863 B1

## Beschreibung

Die Erfindung betrifft ein verbessertes Kraftfahrzeug-Bordnetz. Insbesondere betrifft die Erfindung ein neuartiges Kraftfahrzeug-Bordnetz, bei der die herkömmlichen Batteriefunktionen voneinander entkoppelt sind.

Ein Kraftfahrzeugbordnetz versorgt eine Vielzahl von Steuergeräten und Signalkomponenten in einem Kraftfahrzeug mit Strom. Der Strom wird entweder einer Batterie als Energiespeicher oder, beim Betrieb des Kraftfahrzeugmotors, einem Generator entnommen. Über Relais oder einen elektronischen Stromverteiler mit Halbleiterschaltern kann eine Vielzahl einzelner Anwendungen über individuelle Laststromkreise mit Strom aus dem Kraftfahrzeug-Bordnetz versorgt werden.

Herkömmliche Bordnetze mit einer Spannung von 14 V basieren auf einer Batteriespannung von 12 Volt. Zukünftige Bordnetze sind mit einer 36 Volt-Batterie ausgestattet. Für eine Übergangszeit, in der eine Umstellung von einem 14 Volt auf ein 42 Volt-System stattfindet, werden beide Systeme parallel in einem Kraftfahrzeug eingesetzt.

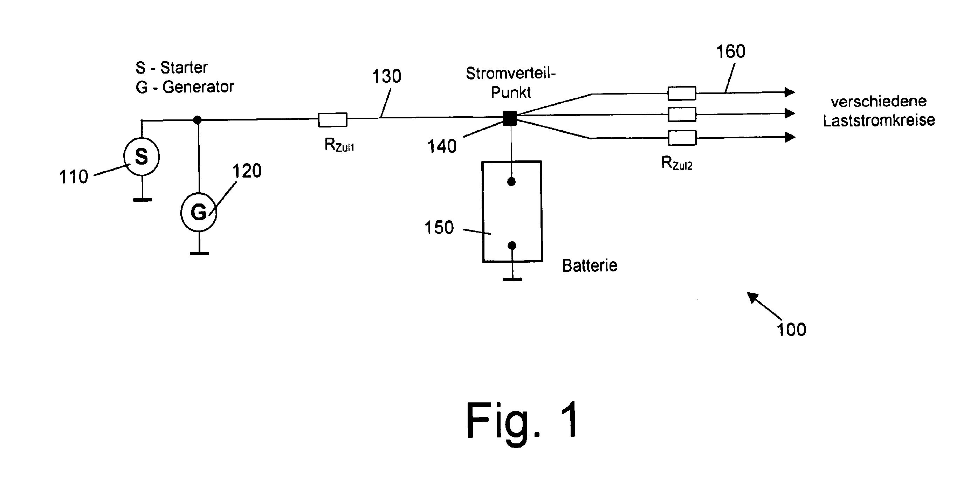

Eine schematische Darstellung eines konventionell aufgebauten Kraftfahrzeug-Bordnetzes ist in Fig. 1 dargestellt. In dem abgebildeten Bordnetz 100 sind ein Generator 120, eine Batterie 150 und ein Starter 110 parallel geschaltet. Im Allgemeinen beträgt die Leitungslänge 130 zwischen dem Generator 120 und dem Starter 110 einerseits und der Batterie 150 andererseits jeweils etwa 1 m. Dabei sind Starter und Generator am Motorblock angeordnet und jeweils über ein kurzes Kabel miteinander verbunden. Aufgrund von Schwankungen des vom Generator bereitgestellten Stroms und zur Übertragung des Starterstroms beträgt der Leitungsquerschnitt in etwa 25 mm$^2$.

Über einen herkömmlichen Stromverteilpunkt oder Stromverteiler 140 wird der Strom verschiedenen Laststromkreisen 160 im Bordnetz des Kraftfahrzeugs zugeführt. Jeder Laststromkreis 160 versorgt einen oder mehrere Verbraucher mit Strom. Bei einer Leitungslänge eines Laststromkreises von etwa 1 m können diese Leitungen einen geringeren Querschnitt als die Leitung 130 aufweisen, und zwar von ca. 5 mm$^2$.

Während der Starter 110 eine sehr hohe Stromaufnahme von bis zu 300A, kurzzeitig sogar bis zu 600A, aufweist, ist die Stromaufnahme aller anderen Verbraucher im Kraftfahrzeug-Bordnetz deutlich geringer. Typische Stromwerte von Verbrauchern im Kraftfahrzeug-Bordnetz reichen von etwa 1,5 A für Standlicht aller Leuchten, 3 A für das Bremslicht und Blinklicht, 8 A für den Scheibenwischer und 8,5 A für Nebel- und Fernscheinwerfer über 10 A für Abblendlicht und das Innenraumgebläse einer Klimaanlage, 18 A für die Motorsteuerung mit Kraftstoffpumpe und 20 A für die Sitzheizung bis hin zu einem elektrischen PTC-Zuheizer mit einer Stromaufnahme im Bereich von etwa 100 A.

Alle Lastkreise 160 sind durch eine Überstromschutzeinrichtung gegen einen Kurzschluss gesichert, so dass die Stromzufuhr zu dem jeweiligen Laststromkreis unterbrochen wird, sobald ein Kurzschluss auftritt. Dadurch wird eine thermische Überhitzung der Kabel- und Steckverbinder in dem jeweiligen Lastkreis verhindert.

Aus EP-A-0 376 667 ist eine Stromversorgung für Kraftfahrzeuge bekannt. Diese Stromversorgung weist einen Generator, eine Batterie sowie einen Kondensator hoher Kapazität auf, die parallel zueinander geschaltet sind. Der Kondensator liefert zusammen mit der Batterie Strom, um bei einem Startvorgang den Startermotor anzutreiben.

In HORST BAUER "Autoelektrik, Autoelektronik, 4. Auflage, 31. Oktober 2002, ROBERT BOSCH GMBH, sind Richtlinien für die Dimensionierung von Versorgungsleitungen in einem Kraftfahrzeug angegeben. Unter anderem sprechen die Richtlinien eine maximale Dauerstrombelastbarkeit in Abhängigkeit von einem Leitungsquerschnitt an.

US-A- 5 642 696 zeigt ein Startersystem für Kraftfahrzeuge mit einer Batterie, einem Startermotor, sowie einem Doppelschichtkondensator, der parallel zur Batterie geschaltet ist, um beim Startvorgang den Starter mit einem hohen Strom zu versorgen. Der Kondensator ist dabei möglichst nah am Startermotor angeordnet, so dass bei einer solchen Anordnung der Durchmesser einer Verbindungsleitung zwischen der Batterie und dem Kondensator verringert werden kann.

WO-A- 02/066293 beschreibt ein Bordnetz für ein Kraftfahrzeug mit einem integriertern Startergenerator. Zusätzlich zu einer Hauptbatterie verfügt dieses Bordnetz über einen Doppelschichtkondensator. Für den Motorstart, beim Beschleunigen sowie beim Abbremsen mit Hilfe des integrierten Startergenerators ist nur der Doppelschichtkondensator mit dem Startergenerator verbunden. Im normalen Fahrbetrieb, bei dem der Startergenerator einen Ladestrom erzeugt, ist der Doppelschichtkondensator von dem Startergenerator und dem restlichen Bordnetz getrennt, so dass der Ladestrom nur der Batterie zugeführt wird.

Aufgabe der Erfindung ist es, ein verbessertes Kraftfahrzeug-Bordnetz anzugeben.

Diese Aufgabe wird mit den Merkmalen des Anspruchs 1 gelöst.

Es ist der besondere Ansatz der vorliegenden Erfindung, dass eine Glättung von Spannungsschwankungen des vom Generator gelieferten Stroms nicht, wie herkömmlich, von der Batterie, sondern von dem Kondensator hoher Kapazität ausgeglichen werden. Die Batterie muss deshalb nicht mehr zwischen dem Generator und den Verbrauchern des Bordnetzes angeordnet sein. Weiterhin liefert nicht mehr die Batterie sondern der Kondensator hoher Kapazität die Energie für den Startvorgang. In der Verbindungsleitung zwischen Batterie und Stromverteiler fließen keine hohen Ströme mehr; so dass geringere Leitungsquerschnitte möglich sind. Eine elektrische Verbindungsleitung zwischen der Batterie und dem Stromverteiler muss daher keine großen Ströme mehr bewältigen und kann mit deutlich geringeren Leitungsquerschnitten realisiert werden. Während herkömmlich Leitungsquerschnitte von 25 mm² bei Anordnung der Batterie im Motorraum und 95 mm² bei Anordnung der Batterie im Heck verwendet werden, können erfindungsgemäß Querschnitte kleiner als 10 mm² bei Anordnung der Batterie im Motorraum und kleiner als 40 mm² bei Anordnung der Batterie im Heck des Kraftfahrzeugs verwendet werden. Damit lassen sich Kraftfahrzeug-Bordnetze mit geringerem Gewicht und niedrigeren Kosten verwirklichen.

Durch Anordnung des Kondensators hoher Kapazität im Stromverteiler müssen nur die elektrischen Verbindungen zwischen Generator und dem Kondensator bzw. dem Starter und dem Kondensator für eine höhere Strombelastung ausgelegt sein, während die Anordnung der Batterie im Kraftfahrzeug von den bisherigen Einschränkungen heutiger Bordnetze befreit ist und beliebig angeordnet werden kann.

Vorzugsweise weist die elektrische Verbindungsleitung zwischen dem Generator und dem Stromverteiler einen Querschnitt kleiner 10 mm², besonders bevorzugt von etwa 5 mm² auf.

Vorzugsweise weist die Verbindungsleitung zwischen Batterie und dem Stromverteiler einen Querschnitt von maximal etwa 5 mm² bei einer Leitungslänge von maximal 2 m, vorzugsweise 1 m auf. Bei diesen Leitungslängen lässt sich die Batterie im Motorraum des Kraftfahrzeugs anordnen, wobei ein besonders niedriger Leitungsquerschnitt verwendet werden kann.

Gemäß einer anderen Ausführungsform der vorliegenden Erfindung beträgt die Leitungslänge zwischen Stromverteiler und Batterie maximal 4 m bei einem Leitungsquerschnitt von maximal etwa 25 mm². Die Batterie kann bei dieser Leitungslänge überall einem Fahrzeug, insbesondere im Heck, angeordnet werden, wobei im Vergleich zu einem herkömmlichen Leitungsquerschnitt von etwa 95 mm² nur ein Leitungsquerschnitt von maximal etwa 25 mm² erforderlich ist.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert. Dabei zeigen die Zeichnungen im Einzelnen:

Fig. 1    den Aufbau eines herkömmlichen Kraftfahrzeug-Bordnetzes;

Fig. 2    den Aufbau eines erfindungsgemäßen Kraftfahrzeug-Bordnetzes;

Fig. 3    einen detaillierten Aufbau eines erfindungsgemäßen Kraftfahrzeug-Bordnetzes gemäß der vorliegenden Erfindung und

Fig. 4    eine elektrische Ersatzschaltung für eine herkömmliche Autobatterie.

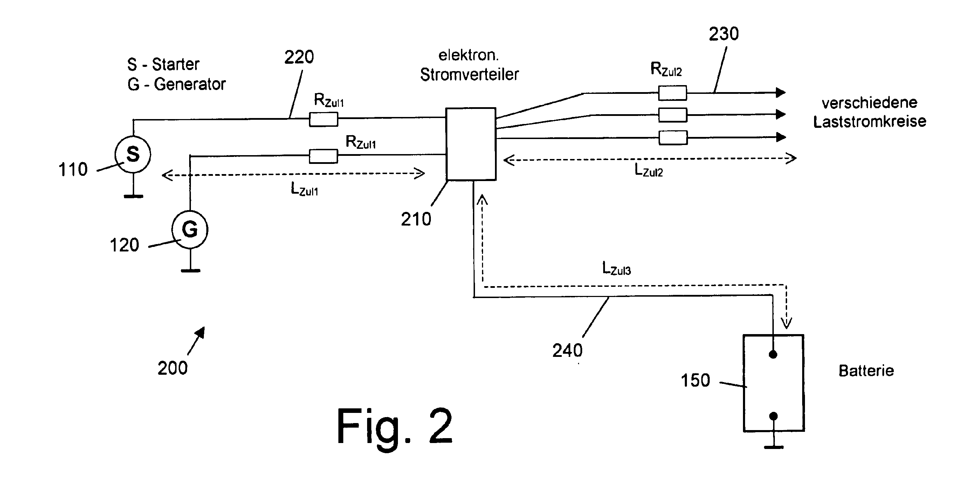

Fig. 2 zeigt in schematischer Weise den Aufbau eines erfindungsgemäßen Kraftfahrzeug-Bordnetzes. Ein Starter 110 und ein Generator 120 sind über separate Zuleitungen 120 mit einem elektronischen Stromverteiler 210 verbunden. Mit dem elektronischen Stromverteiler ist ebenfalls eine Batterie 150 über eine Zuleitung 240 verbunden. Während der Generator 120 während des Betriebs des Kraftfahrzeugmotors elektrischen Strom dem Kraftfahrzeug-Bordnetz 200 bereitstellt, speichert die Batterie 150 während des Betriebs des Motors die von dem Generator 120 bereitgestellte Energie. Um den Motor in Betrieb zu setzen, wird über eine chemische Reaktion in der Batterie 150 elektrische Energie erzeugt und dem Starter 110 zugeführt.

Der Stromverteiler 210 schaltet steuerbar einzelne Laststromkreise 230 an das Kraftfahrzeug-Bordnetz.

Anders als bei herkömmlichen Kraftfahrzeug-Bordnetzen 100 kann die Batterie 150 in dem erfindungsgemäßen Bordnetz 200 beliebig im Kraftfahrzeug positioniert werden, ohne dass Leitungsverbindungen mit großen Leitungsquerschnitten verwendet werden müssen. Während bei einem herkömmlichen Bordnetz 100 gemäß Fig. 1 eine Zuleitung 130 mit einer Länge $L_{Zul1}$ von etwa 1 m einen Querschnitt von 25 mm² aufweist, weisen die erfindungsgemäßen Zuleitungen 220 bei gleicher Länge nur noch eine Querschnittsfläche von in etwa 5 mm² auf. Die von dem Stromverteilpunkt ausgehenden Laststromkreise weisen bei einer Länge $L_{Zul2}$ von etwa 1 m einen Querschnitt von 5 mm² auf.

Bei Anordnung der Batterie 150 in der Nähe des Stromverteilpunkts 140 im Motorraum weist auch die elektrische Verbindung der Batterie mit dem Stromverteilpunkt einen Querschnitt von etwa 5 mm² bei einer Länge $L_{Zul3}$ von maximal etwa 1 m auf.

Alternativ ist die Batterie mit dem Stromverteilpunkt im Heck eines Kraftfahrzeugs angeordnet. Bei dieser Anordnung sind in einem herkömmlichen Bordnetz 100 alle Verbindungsleitungen zu und von dem Stromverteilpunkt 140 bzw. der Batterie 150 erheblich länger. Gleichzeitig müssen die Leitungsquerschnitte erhöht werden, um bei größerer Leitungslänge mit einem entsprechend höheren Widerstand eine Wärmeentwicklung in den Leitungen zu vermeiden. Aus diesem Grund vergrößert sich herkömmlicher Weise der Querschnitt der Leitungen 130 bei einer Länge $L_{Zul1}$ von ca. 4 m auf ungefähr 95mm² und der Leitungsquerschnitt der Leitungen der Lastkreise 160 bei einer Länge $L_{Zul2}$ von bis etwa 5 m auf ungefähr 25 mm².

Erfindungsgemäß können diese Querschnitte erheblich vermindert werden. Zu diesem Zweck werden der elektronische Stromverteiler 210 und die Batterie 150 räumlich voneinander getrennt angeordnet. Gleichzeitig wird die von einer herkömmlichen Batterie ausgeübte Pufferfunktion zum Ausgleich von Spannungsschwankungen des Generators 120 in den elektronischen Stromverteiler 210 verlagert. Bei dieser Anordnung können alle Leitungen bei einer Länge von maximal etwa 1 m einen Querschnitt in der Größenordnung von 5 mm$^2$ aufweisen. Nur bei einer Anordnung der Batterie 150 im Heck eines Kraftfahrzeugs, wobei der elektronische Stromverteiler 210 im Motorraum des Kraftfahrzeugs belassen wird, ist eine längere Leitungsverbindung zwischen elektronischem Stromverteiler 210 und der Batterie 150 erforderlich. Bis zu einer Länge $L_{Zul3}$ von etwa von etwa 4 m beträgt der Leitungsquerschnitt etwa 25 mm$^2$.

Eine weitere Reduzierung der Leitungsquerschnitte ist in Abhängigkeit von der jeweiligen Anwendung dadurch möglich, dass erfindungsgemäß eine aktive Stromüberwachung zur Steuerung des Sicherungsverhaltens im Stromverteiler 210 durchgeführt wird. Die aktive Überwachung des in einen Lastkreis 230 fließenden Stromes erlaubt, bei einem bestimmten Zeitverhalten, insbesondere bei einer schnellen Zunahme über einen vorbestimmen Wert, den Lastkreis abzuschalten.

Im Gegensatz dazu wird der Querschnitt herkömmlicher Leitungen regelmäßig auf den doppelten Nennstrom ausgelegt, um kurze Stromspitzen im Lastkreis ohne thermische Überlastung der Leitungen verkraften zu können. Die erfindungsgemäße Stromüberwachung mit Hilfe einer mikroprozessorgesteuerten Steuereinheit erlaubt, den Überlastschutz exakter an kurzen Überlastspitzen und das Kurzschlussverhalten anzupassen. Damit kann in einfacher Weise der Querschnitt und damit das Gewicht und die Kosten des Kraftfahrzeug-Bordnetzes reduziert werden.

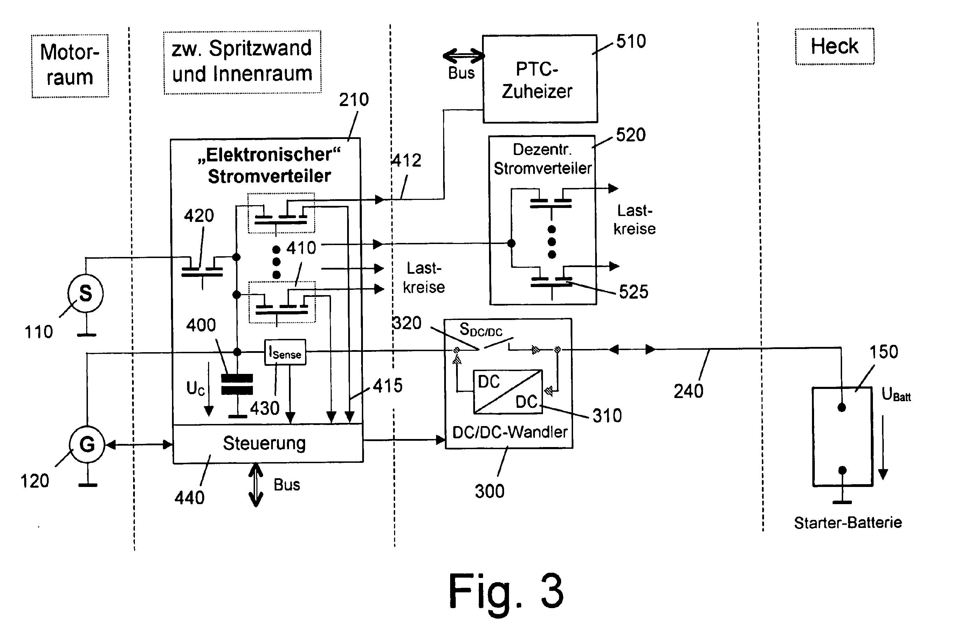

Weitere Details des erfindungsgemäßen Bordnetzes sind in Fig. 3 dargestellt. Bei der in Fig. 3 dargestellten Ausführungsform ist die Batterie 150 vorzugsweise im Heck des Fahrzeugs angeordnet.

Der elektronische Stromverteiler 210 enthält eine Mehrzahl von Halbleiterschaltern 410, die die einzelnen Lastkreise 412 steuerbar mit dem Kraftfahrzeug-Bordnetz verbinden, d.h. eine Stromzufuhr zu den einzelnen Lastkreisen zu- oder abschalten. Für solche Halbleiterschalter werden insbesondere Halbleiterschalter mit einer Smart-Power-Control verwendet. Ein solcher Halbleiterschalter, beispielsweise der Baustein 98 0268 der Firma "International I.R. Rectifier" misst den in den zugeschalteten Lastkreis fließenden Strom. Bei dem angegebenen Halbleiterbaustein wird ein dem gemessenen Strom proportionaler Strom über einen separaten Anschluss ausgegeben. Der von jedem Halbleiterschalter 410 gemessene Strom wird einer Steuerung 440 des elektronischen Stromverteilers zugeführt. Diese Steuerung, die entweder innerhalb des elektronischen Stromverteilers 210 oder separat davon angeordnet ist, überwacht für jeden Lastkreis individuell den zulässigen Strom.

Der für jeden Lastkreis zulässige Stromwert ist vorzugsweise für jeden Lastkreis 412 separat in der Steuerung 440 einstellbar. Gemäß einer bevorzugten Ausführungsform sind in der Steuerung 440 unterschiedliche Stromhöhen und unterschiedliche "Auslöse"-Charakteristika vorgesehen, die für jeden Lastkreis 412 separat auswählbar sind. Sobald der für einen Lastkreis 412 gemessene Strom den für ihn festgelegten Maximalwert unter Berücksichtigung eines zulässigen Überstroms überschreitet, veranlasst die Steuerung 440, dass der Halbleiterschalter 410 die elektrische Verbindung unterbricht.

Mit einem solchen Hableiterschalter ist ein reversibler Abschaltvorgang möglich, bei dem der Lastkreis ohne Austausch beispielsweise einer Schmelzsicherung wieder in Betrieb genommen werden kann. Außerdem ermöglicht die aktive Stromüberwachung ein schnelles Ansprechen im Kurzschussfall. Sehr hohe Kurzschlussströme fließen daher nur für wenige Millisekunden. Deshalb müssen die Leitungen und Steckverbinder des jeweiligen Lastkreises nicht auf einen Kurzschlussfall ausgelegt werden, bei dem für eine deutlich längere Zeit ein hoher Strom fließt.

Die "intelligente" Überwachung des jeweiligen Laststroms in der Steuerung 440 erlaubt, kurze Überströme zuzulassen, ohne dass die elektrische Verbindung zur Stromzuführung zu dem Lastkreis unterbrochen wird. Das Ansprechverhalten kann dadurch individuell gestaltet werden, insbesondere an die Funktion und den Strombedarf (und kurzzeitigen Überstrombedarf) des jeweiligen Lastkreises angepasst werden. Dabei müssen kurze Überströme beim Anlauf eines Motors oder beim Einschalten von Lampen, Zuheizem usw. berücksichtigt werden.

Die Schutzfunktion soll verhindern, dass Überströme bzw. Kurzschlüsse in den Laststromkreisen auftreten und zu einer thermischen Überlastung der Leitungen und Steckverbinder führen. Die thermische Überlastung wird durch die umgesetzte Energie bewirkt, d.h. Stromhöhe multipliziert mit der Zeit, für die der Überstrom anliegt. Es kann durchaus zulässig sein, für eine Sekunde den zehnfachen Nennstrom in einen Lastkreis fließen zu lassen, ohne dass eine Beschädigung auftritt. Ein solcher Überstrom muss von der Steuerung 440 als unproblematisch erkannt werden. Eine Schmelzsicherung dagegen würde bei einem solchen Überstrom eine Unterbrechung herbeiführen und den Strom irreversibel (bis zum Austausch der Sicherung) unterbrechen.

Kurzzeitige Überströme mit einem mehrfachen Wert des Nennstroms treten beispielsweise beim Einschalten eines Elektromotors auf. Beim Anfahren eines Elektromotors kann der Rotor anfänglich etwas schwergängig sein oder klemmen, insbesondere bei tiefen Umgebungstemperaturen. Ein Überstrom, der einem Mehrfachen des Nennstroms entspricht, tritt für einige 100 ms auf. Auch bei elektrischen PTC-Zuheizern, die zur Erwärmung der in den Kraftfahrzeuginnenraum geblasenen Luft verwendet werden, können beim Einschalten innerhalb eines Zeitintervalls von ca. 10 Sekunden Ströme auftreten, die dem Doppelten des Nennstroms entsprechen. Aufgrund des extrem kurzzeitigen Auftretens solcher Überströme sind diese für die Leitungen und Steckverbinder unproblematisch.

Eine herkömmliche Schmelzsicherung ist in der Regel auf einen Ansprechstrom eingestellt, der größer als das Doppelte des Nennstroms ist. Eine solche herkömmliche Sicherung würde aber auch einen dauernden Überstrom akzeptieren, der dem 1,8-fachen des Nennstroms entspricht. Im Gegensatz dazu kann eine elektronische Absicherung gemäß der vorliegenden Erfindung einen derartigen Überstrom erkennen und nach Überschreiten des Zeitkriteriums, beispielsweise 10 Sekunden, die elektrische Verbindung unterbrechen. Der jeweilige Laststromkreis kann daher in seiner Dimensionierung auf den tatsächlichen Nennstrom ausgelegt werden, so dass die Leitungsquerschnitte und der Steckverbinder nicht auf Dauer den doppelten Nennstrom aushalten können müssen.

Die erfindungsgemäße Steuerung 440 lässt sich auch mit Hilfe eines zusätzlichen Temperatursensors an die aktuelle Umgebungstemperatur anpassen. Bei niedrigen Umgebungstemperaturen können aufgrund der verbesserten Kühlung höhere Ströme zugelassen werden. Die Überstromerkennung und Abschaltung eines Lastkreises erfolgt daher vorzugsweise temperaturabhängig, und zwar gemäß einer bevorzugten Ausführungsform über eine vorbestimmte Abhängigkeit zwischen der anzuwendenden Stromobergrenze und der ermittelten Umgebungstemperatur.

Gemäß einer weiter vorteilhaften Ausführungsform kann die Steuerung einen Lastkreis 412 auch in Abhängigkeit von einem externen Signal abschalten. Beispielsweise können Störungen in einem Verbraucher eines Lastkreises über separate Sensoren erkannt und die von diesen ausgehenden Gefahr für das Kraftfahrzeug vorzeitig gebannt werden.

In Fig. 3 sind nur beispielhaft ein PTC-Zuheizer 510 und ein dezentraler Stromverteiler 520 als Verbraucher dargestellt. Der dezentrale Stromverteiler 520 kann über eine Mehrzahl von Halbleiterschaltern 525 ebenfalls untergeordnete Lastkreise zu- und abschalten. Diese Lastkreise sind nur beispielhaft. Für den Fachmann ist es selbstverständlich, dass jeder elektrische Verbraucher eines Kraftfahrzeugs über einen solchen Lastkreis 412 direkt, oder indirekt über einen dezentralen Stromverteiler 520, ansteuerbar ist.

In dem elektrischen Stromverteiler 510 ist erfindungsgemäß ein Kondensator 400 hoher Kapazität vorgesehen, der parallel zum Generator 120 und der Batterie 150 geschaltet ist. Der Kondensator 400 besitzt hohe Kapazitätswerte bei geringem Bauvolumen. Für ein Kraftfahrzeug werden vorzugsweise Kapazitäten im Bereich von 450 bis 600 F verwendet. Heutzutage können Doppelschichtkondensatoren sogar Kapazitäten bis zu mehreren tausend F erreichen.

Doppelschichtkondensatoren erreichen eine um ein Vielfaches höhere Energiedichte als Aluminium-Elektrolytkondensatoren und eine mehrfach höhere Leistungsdichte als Bleibatterien. Während in Batterien die elektrische Energie elektrochemisch gespeichert wird, wird die elektrische Energie in einem Kondensator direkt in Form von positiven oder negativen Ladungen auf den Platten des Kondensators gespeichert. Dabei ist keine chemische Reaktion an den Elektrodenoberflächen erforderlich. Solche Doppelschichtkondensatoren, beispielsweise Doppelschichtkondensatoren der Firma EPCOS mit der Bezeichnung "UltraCap" speichern elektrische Energie und geben sie mit hohem Wirkungsgrad wieder ab. Im Unterschied zu Batterien können sie mit sehr hohen Strömen verschleißfrei geladen und entladen werden. Zudem ermöglichen sie eine sichere Funktion auch bei sehr niedrigen Temperaturen und niedrigen Spannungswerten. Sie geben hohe Leistungen verzögerungsfrei und sehr verlustarm bei Entladeströmen mit bis zu 400 A ab.

Durch die Parallelschaltung eines Kondensators 400 mit hoher Kapazität zu dem Generator 120 und der Starterbatterie 51 lassen sich mehrere Vorteile erreichen. Für den Startvorgang ist nicht mehr die Batterie 150 zuständig, sondern der Hochleistungskondensator 400. Der Kondensator 400 wird vor Ausführung des Startvorgangs von der Batterie 150 aufgeladen. Anschließend gibt der Kondensator 400 die gespeicherte Energie an den Starter 110 ab. Der Startvorgang kann damit sicherer ausgestaltet werden, da der Kondensator in der Lage ist, hohe Energiemengen auch kurzzeitig bei niedrigen Temperaturen abzugeben. Im Gegensatz dazu haben herkömmliche Kraftfahrzeuge bei niedrigen Temperaturen häufig Startprobleme, da die in der Batterie 150 ablaufenden chemischen Reaktionen keine großen Ströme zulassen.

Gemäß einer besonders vorteilhaften Ausführungsform der Erfindung lässt sich das Startverhalten weiter verbessern, indem ohne Erhöhung der Kapazität des Kondensators die in ihm gespeicherte Energie erhöht wird. Zu diesem Zweck wird erfindungsgemäß zur Vorbereitung eines Startvorgangs ein Spannungswandler 310 zwischen die Batterie 150 und den Kondensator 400 geschaltet. Der Spannungswandler 310 setzt die von der Batterie gelieferte Spannung 150 in eine höhere Spannung um. Damit kann der Kondensator bei gleicher Kapazität eine sehr viel größere Energiemenge aufnehmen. Die in dem Kondensator gespeicherte Energiemenge lässt sich gemäß der nachfolgenden Gleichung bestimmen:

$$E = 1/2 \cdot C \cdot U^2.$$

Gleichzeitig ist parallel zu dem Spannungswandler 310 in die elektrische Verbindung zwischen der Batterie 150 und dem Kondensator 400 ein Unterbrecher 320 geschaltet. Der Unterbrecher trennt die direkte elektrische Verbindung zwischen der Batterie und dem Kondensator auf, so dass dem Kondensator eine sehr viel höhere Spannung zugeführt werden kann.

Durch die erfindungsgemäße Vorrichtung 300 mit einem Spannungswandler und einem Unterbrecher kann die für einen Startvorgang zur Verfügung stehende Energie in einfacher Weise deutlich erhöht werden. Ein sicheres Starten des Kraftfahrzeugs ist dann auch bei schwacher Batterie mit nur noch geringen Energiereserven weiterhin möglich.

Nachfolgend wird beispielhaft ein Startvorgang beschrieben, bei dem der erfindungsgemäße Spannungswandler verwendet wird.

Bei Stillstand des Kraftfahrzeugs, d.h. Motor und Zündung sind ausgeschaltet, ist der Spannungswandler (DC/DC-Wandler) 310 ausgeschaltet und die elektrische Verbindung zwischen dem elektrischen Stromverteiler 210 und der Batterie 150 wird durch den Schalter 320 hergestellt. Der Kondensator 400 ist damit parallel zur Batterie 150 geschaltet und auf die Batteriespannung $U_{BATT}$ aufgeladen. Bei herkömmlichen Bordnetzen auf eine Spannung von etwa 12,5 V, bei zukünftigen Bordnetzen auf etwa 42 V.

Vor dem Startvorgang des Verbrennungsmotors wird der Spannungswandler 310 aktiviert und gleichzeitig der Schalter 320 geöffnet. Vorzugsweise werden, wenn erforderlich, über den elektronischen Stromverteiler 210 einzelne Lastkreise abgeschaltet. Insbesondere werden solche Lastkreise 412 abgeschaltet, die einen hohen Strombedarf besitzen. Die Abschaltung kann gemäß einer besonderen Ausführungsform über die Steuerung 440 auch in Abhängigkeit von der Höhe der Batteriespannung vorgenommen werden, um bei schwacher Batterie ein sicheres Starten zu gewährleisten.

Der Spannungswandler erzeugt nun eine Ausgangsspannung, die an den Kondensator angelegt ist, wobei die Ausgangsspannung oberhalb der Batteriespannung liegt. Bei einer Batteriespannung von 12,5 V beträgt die erhöhte Ausgangsspannung beispielsweise 16 V. Die Spannung liegt damit um 3,5 V oberhalb der Batteriespannung und lädt den Kondensator entsprechend höher auf. Damit ist auch die in dem Kondenstor gespeicherte Energie um etwa 60 % höher als bei einer herkömmlichen Ladespannung von 12,5 V.

Damit stehen auch bei einer schwachen Batterie mit einer Batteriespannung die unterhalb von 12,5 V liegt, ausreichend Energiereserven für den Startvorgang zur Verfügung. Wenn der Spannungswandler den Kondensator 400 immer mit einer Spannung von 16 V auflädt, steht für den Startvorgang immer die gleiche Energiemenge zur Verfügung, unabhängig von der Leistungsfähigkeit der Batterie.

Der durch den Spannungswandler erzielte Vorteil lässt sich entweder in erhöhte Energiereserven für den Startvorgang umsetzen oder zur Reduzierung der Kapazität des Kondensators. Bei gleicher gespeicherter Energiemenge ist dann eine geringe Kapazität des Kondensators 400 für einen sicheren Startvorgang ausreichend.

Eine weitere Erhöhung der Energiemenge im Kondensator 400 lässt sich durch eine weitere Erhöhung der Ladespannung höher als 16 V in herkömmlichen Bordnetzen erreichen. Eine Beschränkung auf eine Ladespannung von 16 V besitzt den Vorteil, dass diese Erhöhung keine weiteren Komplikationen mit anderen elektrischen Komponenten des Bordnetzes nach sich zieht. Heutzutage sind alle elektrischen und elektronischen Komponenten eines Kraftfahrzeug-Bordnetzes auf eine Betriebsspannung von maximal 16 V ausgelegt. Die Ladespannung des Kondensators 400 ist daher vorzugsweise an der Auslegung der elektrischen Komponenten des Bordnetzes und der Spannungsfestigkeit des Kondensators selbst orientiert. Bei zukünftigen Bordnetzen mit einer Systemspannung von 42 V lässt sich der Kondensator auf eine deutlich höhere Spannung aufladen, soweit eine kurzzeitige Spannungserhöhung von den anderen elektrischen Komponenten ohne Probleme verkraftet wird.

Alternativ kann bei besonders hohen Ausgangsspannungen des Spannungswandlers kann über ein Abschalten aller Lastkreise bzw. Verbraucher über die Halbleiterschalter 410 jede Komplikation mit anderen Bordnetz-Komponenten ausgeschlossen und ein besonderes sicherer Startvorgang realisiert werden.

Die Aufladung des Kondensators erfolgt rechtzeitig vor Beginn des Startvorgangs. Zur Einleitung des Aufladevorgangs des Kondensators 400 können mehrere Auslöser herangezogen werden. Beispielsweise kann der Fahrer die Aufladung starten, wenn der Zündschlüssel eingesteckt wird oder das Zündschloss in die Stellung "Zündung EIN" gebracht wird. Alternativ kann der Aufladevorgang durch Öffnen einer Fahrzeugtür ausgelöst werden. Dabei kann das Öffnen einer beliebigen Fahrzeugtür als auch das Öffnen der Fahrer-Fahrzeugtür erfasst und als Auslösesignal für die Aufladung verwendet werden. Wenn die Fahrzeugtür als auslösendes Ereignis für den Beginn des Aufladevorgangs verwendet wird, steht mehr Zeit als bei Erfassung der Zündschlüsselstellung zur Verfügung.

Mit der Zündschlüsselstellung "Starten" wird der Spannungswandler ausgeschaltet. Solange der Startvorgang läuft, bleibt der Unterbrecher 320 geöffnet. Sobald der Verbrennungsmotor selbsttätig läuft, wird der Unterbrecher 320 geschlossen und das Bordnetz wieder auf eine Spannung von ca. 12, 5 V gesetzt.

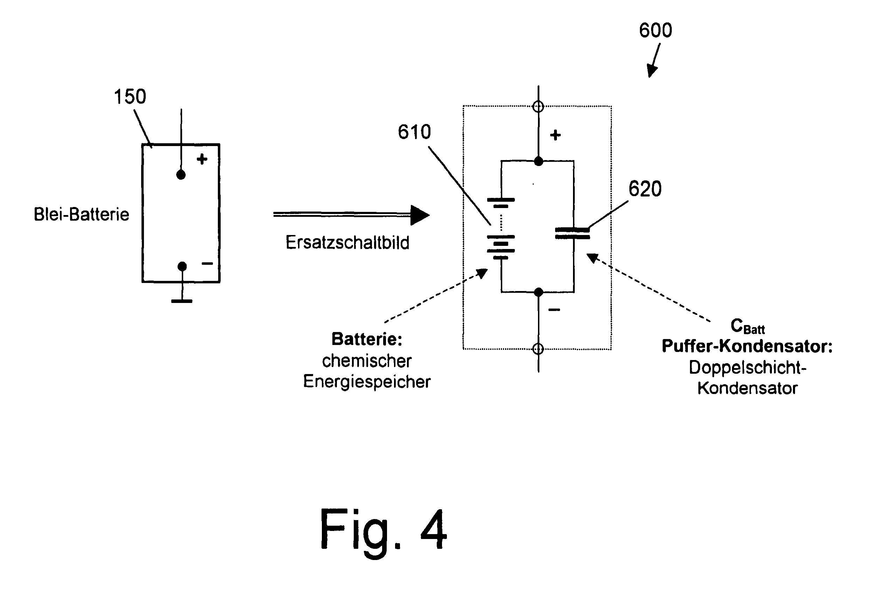

Der Kondensator 400 ermöglicht nicht nur eine Verbesserung des Startvorgangs, sondern kann außerdem die Pufferwirkung der herkömmlichen Batterie 150 übernehmen. Ein Ersatzschaltbild einer herkömmlichen Batterie 150 ist in Fig. 4 dargestellt.

Das Ersatzschaltbild 600 der Batterie 150 zeigt, dass die Batterie nicht nur die Funktion eines chemischen Energiespeichers 610, sondern auch die Funktion eines Pufferkondensator 620 besitzt. Diese Kondensatorwirkung ergibt sich aus dem inneren Aufbau der Bleibatterie.

Die Kondensatorwirkung einer herkömmlichen Batterie wird bisher dazu verwendet, vom Generator 120 herrührende Spannungsschwankungen zu glätten.

Der Generator 120 erzeugt bei laufendem Kraftfahrzeugmotor einen Drehstrom, der mit Hilfe von Dioden gleichgerichtet wird. In heutigen Kraftfahrzeugbordnetzen ist die Batterie 150 räumlich so angeordnet, dass sie zwischen dem Generator 150 und den Verbrauchern in den Lastkreisen 412 liegt. Vor allem wird aus der Kombination der Batteriekapazität $C_{Batt}$ und dem Zuleitungswiderstand der elektrischen Verbindungsleitung zwischen dem Generator 120 und der Batterie 150 $R_{Zul1}$ ein Tiefpass gebildet. Der Tiefpass bewirkt eine Glättung der Spannungsschwankungen des vom Generator erzeugten Stroms.

Erfindungsgemäß wird diese Funktion von dem Kondensator 400 mit hoher Kapazität übernommen.

Während herkömmliche Bordnetze so ausgebildet sind, dass auf den elektrischen Verbindungsleitungen zwischen Generator und Batterie hohe Ströme zum Ausgleich der Spannungsschwankungen fließen können, wird erfindungsgemäß die Funktion der Energiespeicherung und Energiepufferung von getrennten Baueinheiten in dem Kraftfahrzeug-Bordnetz wahrgenommen. Während der Kondensator 400 die Pufferung von Spannungsschwankungen übernimmt, stellt die Batterie 150 die Energie für den Startvorgang bereit. Damit lässt sich die Batterie in einfacher Weise entfernt von dem Generator und dem Stromverteiler positionieren, ohne dass der herkömmliche Aufwand für eine elektrische Leitungsverbindung 240 mit der Batterie erforderlich ist. Im Gegenteil, die Querschnitte können, wie beispielhaft im Zusammenhang mit Fig. 2 beschrieben, auf deutlich kleinere Werte reduziert werden. Damit werden Kraftfahrzeugbordnetze leichter und preisgünstiger.

Die Pufferfunktion wird durch die Anordnungsfolge Generator - Batterie - Stromverteiler - Verbraucher in Verbindung mit dem sich einstellenden Tiefpaß erreicht. Der Tiefpaß wird aus dem Zuleitungswiderstand $R_{Zul1}$ zwischen dem Generator und der Batterie einerseits und der Kapazität $C_{Batt}$ der Batterie andererseits gebildet. Ein geringerer Leitungsquerschnitt bewirkt zudem einen höheren Zuleitungswiderstand $R_{Zul1}$ und verbessert damit die Tiefpasswirkung aufgrund der Gleichung für die Zeitkonstante Tau des Tiefpasses:

$$Tau = R_{Zul1} \cdot C_{Batt}$$

Zusammenfassend hat das erfindungsgemäße neue Kraftfahrzeug-Bordnetz eine Vielzahl von Vorteilen gegenüber herkömmlichen Bordnetzen. Die Starterbatterie übernimmt nicht mehr die Startfunktion, ist einer geringeren Impuls- und Strombelastung ausgesetzt, muss nur noch reduzierte Anforderungen hinsichtlich des Tieftemperaturverhaltens erfüllen und kann eine Batterie mit reduzierter Speicherkapazität sein. Mit Hilfe eines Spannungswandlers lässt sich die Energie und damit die Startsicherheit erhöhen. Die Leitungen weisen nur noch einen geringeren Querschnitt auf, so dass Kosten und Gewichtsvorteile erzielt werden, insbesondere bei der Anordnung der Batterie im Heck des Kraftfahrzeugs.

## Patentansprüche

1. Kraftfahrzeug-Bordnetz mit einem Generator (120), einer Batterie (150), einem Kondensator (400) hoher Kapazität, die parallel geschaltet sind, **gekennzeichnet durch** einen Stromverteiler (210) zur steuerbaren Zuführung von Energie zu einzelnen Lastkreisen (230) des Kraftfahrzeugs, und eine elektrische Verbindungsleitung (240) zwischen der Batterie (150) und dem Stromverteiler (210) mit einem Querschnitt kleiner 10 mm² bei einer Leitungslänge ($L_{Zul3}$) kleiner als 2 m und einem Querschnitt kleiner 40 mm² bei einer Leitungslänge ($L_{Zul3}$) größer als 2 m, wobei der Kondensator (400) hoher Kapazität zur Glättung von Spannungsschwankungen in dem vom Generator (120) erzeugten Strom innerhalb des oder benachbart zum Stromverteiler (210) angeordnet ist, die elektrische Verbindungsleitung zwischen dem Generator (120) und dem Stromverteiler (210) eine maximale Leitungslänge (LZul1) von etwa 1 m aufweist und lediglich die Verbindungsleitung zwischen Generator (120) und Kondensator (400) für eine höhere Strombelastung ausgelegt ist, so dass die Batterie (150) beliebig anordbar ist.

2. Kraftfahrzeug-Bordnetz nach Anspruch 1, wobei die elektrische Verbindungsleitung (220) zwischen dem Generator (120) und dem Stromverteiler (210) einen Querschnitt kleiner 10 mm² aufweist.

3. Kraftfahrzeug-Bordnetz nach Anspruch 1 oder 2, wobei die elektrische Verbindungsleitung (220) zwischen dem Generator (120) und dem Stromverteiler (210) einen Querschnitt von etwa 5 mm² aufweist.

4. Kraftfahrzeug-Bordnetz nach einem der Ansprüche 1 bis 3, wobei die elektrische Verbindungsleitung (240) zwischen der Batterie (150) und dem Stromverteiler (210) einen Querschnitt von maximal etwa 5 mm² bei einer Leitungslänge ($L_{Zul3}$) von maximal etwa 2 m aufweist.

5. Kraftfahrzeug-Bordnetz nach Anspruch 4, wobei die Batterie (150) und der Stromverteiler (210) im Motorraum des Kraftfahrzeugs angeordnet sind.

6. Kraftfahrzeug-Bordnetz nach einem der Ansprüche 1 bis 3, wobei die elektrische Verbindungsleitung (240) zwischen der Batterie (150) und dem Stromverteiler (210) einen Querschnitt von maximal etwa 25 mm² bei einer Leitungslänge ($L_{Zul3}$) von maximal etwa 4 m aufweist.

**7.** Kraftfahrzeug-Bordnetz nach Anspruch 5, wobei die Batterie (150) im Heck und der Stromverteiler (210) im Motorraum des Kraftfahrzeugs angeordnet ist.

## Claims

**1.** A motor vehicle electrical system, comprising a generator (120), a battery (150), a high-capacity capacitor (400) connected in parallel,
**characterized by**
a power distributor (210) for controllably supplying energy to individual load circuits (230) of the motor vehicle, and
an electrical connection line (240) between the battery (150) and the power distributor (210) having a cross-section of less than 10 mm$^2$ for a line length of less than 2 m ($L_{Zul3}$) while having a cross-section of less than 40 mm$^2$ for a line length of more than 2 m ($L_{Zul3}$),
wherein the high-capacity capacitor (400) for smoothening of voltage fluctuations of the current generated by the generator (120) is mounted inside or adjacent to the power distributor (210), the electrical connection line between the generator (120) and the power distributor (210) has a maximum line length ($L_{Zul1}$) of approximately 1 m and only the electrical connections between the generator (120) and the capacitor (400) are designed for a higher current load such that the battery (150) can be mounted anywhere:

**2.** A motor vehicle electrical system according to claim 1, wherein the electrical connection line (220) between the generator (120) and the power distributor (210) has a cross-section of less than 10 mm$^2$.

**3.** A motor vehicle electrical system according to claim 1, wherein the electrical connection line (220) between the generator (120) and the power distributor (210) has a cross-section of approximately 5 mm$^2$.

**4.** A motor vehicle electrical system according to any of claims 1 to 3, wherein the electrical connection line (240) between the battery (150) and the power distributor (210) has a maximum cross-section of approximately 5 mm$^2$ for a line length of maximally approximately 2 m ($L_{Zul3}$).

**5.** A motor vehicle electrical system according claim 4, wherein the battery (150) and the power distributor (210) are mounted in the engine compartment of the motor vehicle.

**6.** A motor vehicle electrical system according to any of claims 1 to 3, wherein the electrical connection line (240) between the battery (150) and the power distributor (210) has a maximum cross-section of approximately 25 mm$^2$ for a line length of maximally approximately 4 m ($L_{Zul3}$).

**7.** A motor vehicle electrical system according claim 5, wherein the battery (150) is mounted in the rear end and the power distributor (210) in the engine compartment of the motor vehicle.

## Revendications

**1.** Réseau de bord d'un véhicule automobile avec un générateur (120), une batterie (150), un condensateur (400) de haute capacité qui sont branchés en parallèle,
**caractérisé par**
un distributeur de courant (210) pour une amenée d'énergie pouvant être commandée aux différents circuits de charge (230) du véhicule automobile, et une ligne de branchement électrique (240) entre la batterie (150) et le distributeur de courant (210) avec une section plus petite que 10 mm$^2$ pour une longueur de ligne (LZul3) plus petite que 2 m et une section plus petite que 40 mm$^2$ pour une longueur de ligne (LZul3) plus grande que 2 m,
dans lequel le condensateur (400) de haute capacité pour le lissage de fluctuations de tension dans le courant produit par le générateur (120) est disposé à l'intérieur ou au voisinage du distributeur de courant (210), la ligne de branchement électrique entre le générateur (120) et le distributeur de courant (210) présente une longueur de ligne maximale (LZul1) d'environ 1 m, et seule la ligne de liaison entre le générateur (120) et le condensateur (400) est dimensionnée pour une charge de courant plus élevée, de telle sorte que la batterie (150) peut être disposée à volonté.

**2.** Réseau de bord d'un véhicule automobile selon la revendication 1, dans lequel la ligne de branchement électrique (220) entre le générateur (120) et le distributeur de courant (210) présente une section plus petite que 10 mm$^2$.

**3.** Réseau de bord d'un véhicule automobile selon la revendication 1 ou 2, dans lequel la ligne de branchement électrique (220) entre le générateur (120) et le distributeur de courant (210) présente une section d'environ 5 mm$^2$.

**4.** Réseau de bord d'un véhicule automobile selon l'une quelconque des revendications 1 à 3, dans lequel la ligne de branchement électrique (240) entre la batterie (150) et le distributeur de courant (210) présente une section d'environ 5 mm$^2$ au maximum pour une longueur de ligne (LZul3) d'environ 2 m au maximum.

**5.** Réseau de bord d'un véhicule automobile selon la revendication 4, dans lequel la batterie (150) et le distributeur de courant (210) sont disposés dans le compartiment moteur du véhicule automobile.

**6.** Réseau de bord d'un véhicule automobile selon l'une quelconque des revendications 1 à 3, dans lequel la ligne de branchement électrique (240) entre la batterie (150) et le distributeur de courant (210) présente une section d'environ 25 mm$^2$ au maximum pour une longueur de ligne (LZul3) d'environ 4 m au maximum.

**7.** Réseau de bord d'un véhicule automobile selon la revendication 5, dans lequel la batterie (150) est disposée à l'arrière et le distributeur de courant (210) dans le compartiment moteur du véhicule automobile.

S - Starter
G - Generator

Stromverteil-Punkt

130

160

verschiedene
Laststromkreise

$R_{Zul1}$

140

$R_{Zul2}$

110

120

150

Batterie

100

Fig. 1

Fig. 2

Fig. 3

EP 1 564 863 B1

**150**

Blei-Batterie

Ersatzschaltbild

**600**

**610**

**620**

+

−

**Batterie:**
chemischer
Energiespeicher

$C_{Batt}$
**Puffer-Kondensator:**
Doppelschicht-
Kondensator

# Fig. 4

EP 1 564 863 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0376667 A
- US 5642696 A
- WO 02066293 A

**In der Beschreibung aufgeführte Nicht-Patentliteratur**

- *Autoelektrik, Autoelektronik,* 31. Oktober 2002, vol. 4